# EUROPÄISCHE PATENTANMELDUNG

(11) **EP 0 794 603 A2**
(43) Veröffentlichungstag der Anmeldung: **10.09.1997**
(21) Anmeldenummer: 96116423.3
(22) Anmeldetag: 14.10.1996
(51) Int. Cl.: H02G 1/08

(54) **Vorrichtung zum Einziehen von einer Leitung in ein Rohr**

(30) Priorität: 09.03.1996 DE 19609295
(71) Anmelder: Paul, Michael, 89250 Senden-Witzighausen (DE)
(72) Erfinder: Paul, Michael, 89250 Senden-Witzighausen (DE)
(74) Vertreter: Dziewior, Joachim, Dipl.-Phys. Dr.

(57) **Zusammenfassung**

Die Erfindung betrifft eine Vorrichtung zum Einziehen von einer Leitung (1) in ein Rohr (2). Sie weist eine an einem Rohrende (3) des Rohres (2) einsetzbare, mit der Leitung (1) koppelbare Kappe (4) auf. Die Leitung (1) ist durch einen Führungskanal (10) einer das Rohrende (3) verschließenden Dichtung (8) geführt. Eine an einem Gaskanal (10) in der Dichtung (8) ansetzbare Gasleitung (15) ist mit hohem Druck beaufschlagbar.

## Beschreibung

Die Erfindung betrifft eine Vorrichtung zum Einziehen von einer Leitung in ein Rohr.

Bisher ist es üblich, Rohre mit Leitungen wie Elektrokabel, Draht, Seilzüge oder dergl. zu bestücken, indem die Leitungen per Hand von einem Rohrende stückweise durchgeschoben werden. Insbesondere bei großen zu überbrückenden Entfernungen und bei dicken Leitungen, bzw. wenn mehrere Leitungen durch ein Rohr geführt werden sollen, erweist es sich oftmals als notwendig, zunächst einen dünnen Draht durchzuschieben, mit dessen Hilfe dann anschließend die Leitung in das Rohr eingezogen werden kann. Diese Art der Bestückung von Rohren ist zeitraubend und damit arbeits- und kostenintensiv, wobei die auszuführende Arbeit selber relativ monoton ist.

Die der Erfindung zugrunde liegende Aufgabe besteht daher darin, eine Vorrichtung zum Einziehen von Leitungen in Rohre bereitzustellen, mit der mit weniger Aufwand und in erheblich kürzerer Zeit eine Leitung in ein Rohr eingezogen werden kann.

Diese Aufgabe wird erfindungsgemäß dadurch gelöst, daß eine an einem Rohrende des Rohres einsetzbare, mit der Leitung koppelbare Kappe vorgesehen ist, daß die Leitung durch einen Führungskanal einer das Rohrende verschließenden Dichtung geführt ist, und daß an einem Gaskanal in der Dichtung eine mit Druck beaufschlagbare Gasleitung angesetzt ist.

Die Erfindung bietet den Vorteil, daß einfach die Leitung an der Kappe befestigt werden kann, diese sodann in das Rohr eingesetzt wird und durch den Gasdruck in einem Zug durch das gesamte Rohr durchgeblasen wird. Die Länge, die das Rohr dabei aufweisen darf, damit die Kappe vollständig durch dieses hindurchgeblasen wird, hängt vom Durchmesser des Rohres, der Masse der Leitung sowie des verwendeten Gasdrucks ab, liegt aber auf jeden Fall deutlich über den beispielsweise bei Installationsarbeiten auf Baustellen zu überbrückenden Entfernungen, da mit der erfindungsgemäßen Vorrichtung Reichweiten von mehr als 50 m erreicht werden.

Eine im Rahmen der Erfindung besonders bevorzugte Ausführungsform ist dadurch gekennzeichnet, daß als Gas Druckluft vorgesehen und an der Gasleitung eine Druckluftpistole angeschlossen ist, die am Gaskanal der Dichtung angesetzt ist. Grundsätzlich ist es möglich, jede Art von Gas zu verwenden und dies beispielsweise in Gasflaschen bereitzustellen. Hinsichtlich der Kosten und der Verfügbarkeit ist es jedoch günstig, Druckluft einzusetzen, wobei die Verwendung einer Druckluftpistole den weiteren Vorteil bietet, daß man nur zu einem gewünschten, genau definierten Zeitpunkt die Druckluft in das Rohr und gegen die Kappe blasen kann.

Im Rahmen der Erfindung ist vorgesehen, daß der Führungskanal durch eine Bohrung in der Dichtung gebildet ist. Wenn durch die Druckluft die Kappe durch das Rohr geblasen wird, muß mit der entsprechenden Geschwindigkeit die Leitung nachführbar sein, damit diese nicht bremsend wirkt und die mit der erfindungsgemäßen Vorrichtung erzielbare Reichweite sich nicht verringert. Deshalb ist es günstig, die Leitung nicht in eine Nut an der Oberfläche der Dichtung einzulegen, da beim Anpressen der Dichtung an das Rohrende die Dichtung verformt wird und die Leitung einklemmen kann. Außerdem würde durch diese Nut die Dichtwirkung der Dichtung gegenüber dem Rohr beeinträchtigt. Die Dichtwirkung am Umfang der Dichtung ist vollständig gewährleistet, wenn die Leitung durch die Bohrung in der Dichtung geführt ist, wobei die Leitung selber nicht dem Risiko ausgesetzt ist, durch elastische Verformung der Dichtung beim Anpressen an das Rohrende eingeklemmt zu werden. Insbesondere wenn im Führungskanal eine Metallhülse angeordnet ist, ist das diesbezüglich bestehende Restrisiko vollständig eliminiert und die Reibung zwischen Leitung und Dichtung nochmals verringert.

Bevorzugt im Rahmen der Erfindung ist es gleichfalls, wenn der Führungskanal und der Gaskanal durch eine gemeinsame Bohrung in der Dichtung gebildet sind. Damit wird ein einfacherer Aufbau der Vorrichtung erreicht, der kostengünstig hergestellt werden kann, wobei das Einfädeln der Leitung aufgrund des größeren Durchmessers dieser Bohrung erleichtert ist.

Eine Vergrößerung der mit der Vorrichtung erzielbaren Reichweite läßt sich in einfacher Weise dadurch erreichen, daß in der Gasleitung vor deren Verbindung mit der Dichtung eine Öffnung zum Ansaugen von Luft vorgesehen ist. Dieser Effekt der Reichweitenvergrößerung läßt sich noch dadurch steigern, daß zwei der Öffnungen vorgesehen sind, und daß ein Versteifungssteg eine der Öffnungen überbrückt. Der Versteifungssteg verbessert dabei die Haltbarkeit der Vorrichtung und verhindert, daß die Dichtung im Gebrauch abgeknickt werden kann.

Ist die Dichtung als Kegel ausgebildet, so ergibt sich die Möglichkeit, daß mit einer Dichtung nicht nur ein Rohr mit einem bestimmten Durchmesser abgedichtet werden kann, sondern daß die Dichtung bei mehreren Rohrdurchmessern Verwendung findet, da der Kegel lediglich unterschiedlich weit in das Rohrende eingeführt werden muß.

Im Gaskanal ist eine Metallhülse angeordnet, die gewährleistet, daß bei einem plötzlichen Druckstoß die darin enthaltene Energie nicht zur Verformung der Dichtung verschwendet wird, sondern optimal zur Beschleunigung der Kappe ausgenutzt werden kann.

Die Kappe ist als Segel ausgebildet, das derartig in das Rohrende einsetzbar ist, daß es an der Innenwand des Rohres dichtend anliegt. Mit dem Segel wird erreicht, daß eine besonders gute Abdichtung gegenüber der Innenwand des Rohres aufgrund der tangential an der Innenwand anliegenden Rändern des Segels gegeben ist, ohne daß dabei eine besonders große Reibung zwischen Kappe und Rohrinnenwand auftritt.

Hinsichtlich der Einfachheit des Aufbaus ist es bevorzugt, wenn im Segel ein Loch vorgesehen ist, das durch die durchgeführte Leitung abgedichtet ist. Aufwendige Befestigungsmittel sind dann verzichtbar, da in dem durchgeführten Ende der Leitung ein Knoten ausgebildet werden kann, an dem das Segel die Leitung durch das Rohr zieht, wobei gleichzeitig der Knoten das Loch abdeckt.

Bei einer Weiterbildung der Erfindung weist die Dichtung an dem dem Rohrende zugewandten Ende einen zylinderförmigen Bund auf, auf den das Segel aufgesteckt werden kann, so daß es mit der Dichtung gemeinsam in das Rohr einführbar ist.

Nach einer alternativen Ausführungsform ist auf der dem Rohrende zugewandten Ende der Kappe ein Anschlußteil für die Befestigung der Leitung angeordnet. Dabei ist im Rahmen der Erfindung vorgesehen, daß das Anschlußteil als Metallstift mit einem Hakenverschluß ausgebildet ist. In diesen Hakenverschluß kann eine Schleife der Leitung eingehängt werden, so daß nicht die Gefahr besteht, daß beim Durchblasen der Kappe durch das Rohr diese die Verbindung zur Leitung verliert.

Wenn an der Druckluftpistole eine Vorratsrolle für die Leitung angeordnet ist, ist gewährleistet, daß diese immer unter einem gleichbleibenden Winkel dem Führungskanal zugeführt wird und nicht verknoten kann, was bei einer ungeordnet aufbewahrten Leitung immer als Möglichkeit mit berücksichtigt werden müßte. Als Vorratsrollen sind insbesondere allgemein bekannte Angelrollen geeignet.

Vorteilhafterweise ist an der Druckluftpistole eine Öse zur Führung der Leitung angeordnet, die dessen Verwirrung verhindert.

Im folgenden soll die Erfindung an einem in der Zeichnung dargestellten Ausführungsbeispiel näher erläutert werden; es zeigen:
- Fig. 1: eine schematische Darstellung der Erfindung mit einer dem Rohrende angenäherten Dichtung,
- Fig. 2: eine der Fig. 1 entsprechende Darstellung mit der an das Rohrende angesetzten Dichtung sowie der am Anschlußteil der Kappe befestigten Leitung, und
- Fig. 3: eine Seitenansicht einer Druckluftpistole mit integraler Dichtung.

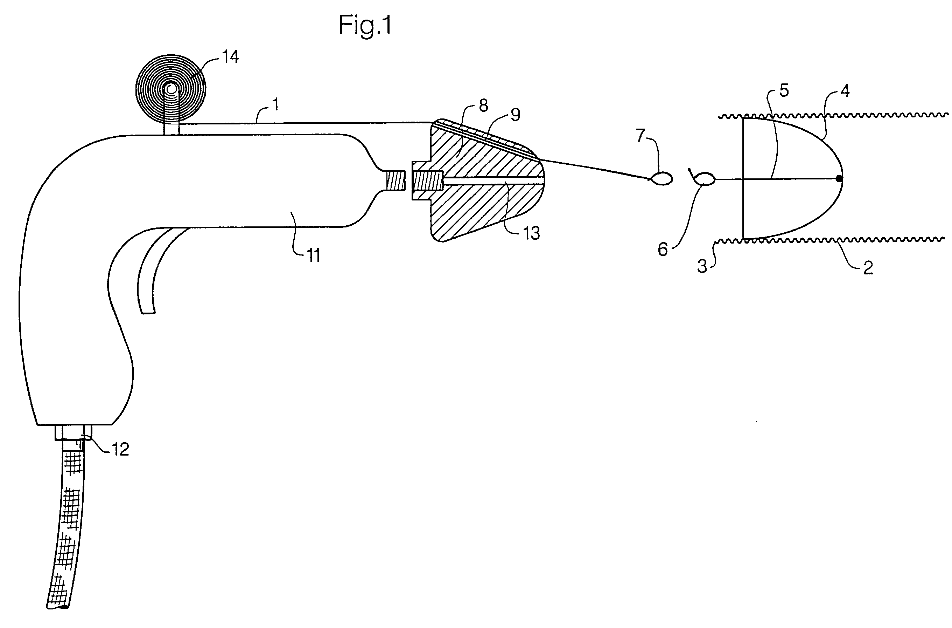

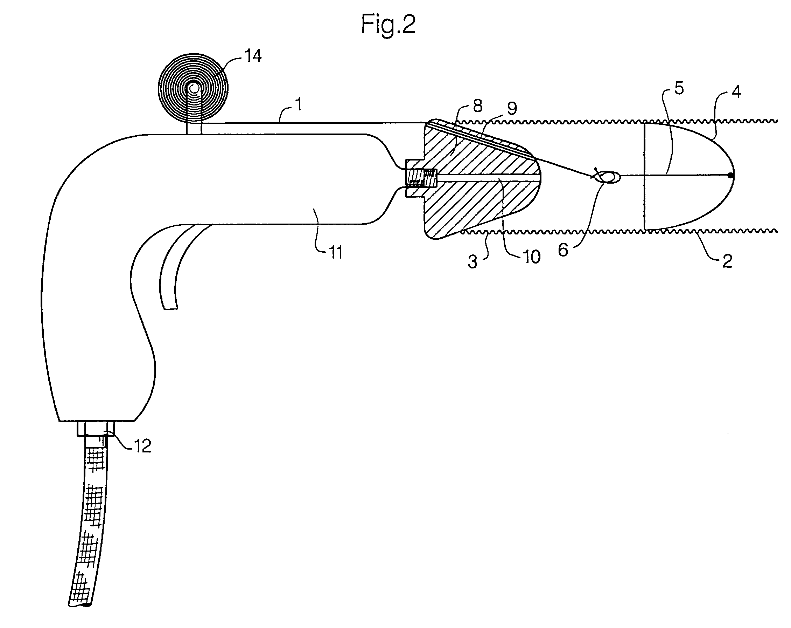

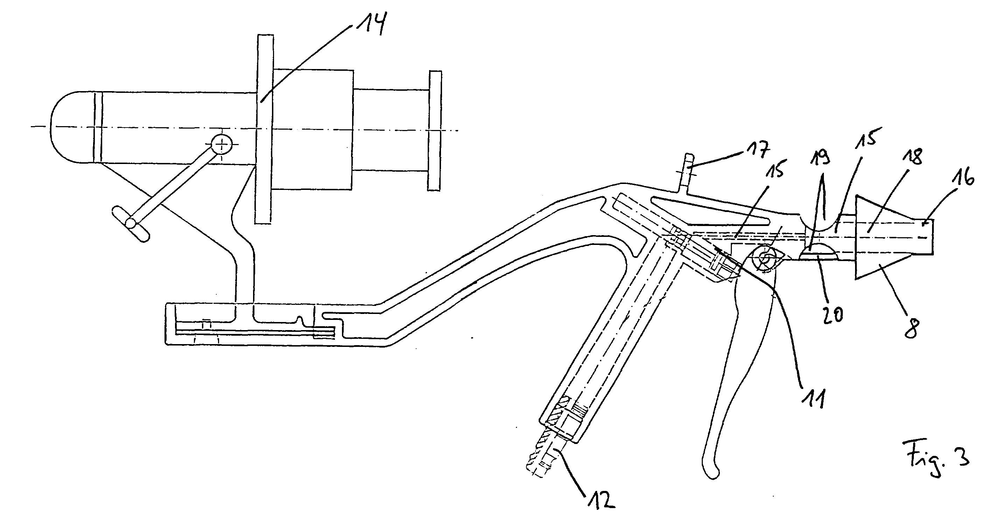

Die erfindungsgemäße Vorrichtung dient zum Einziehen von einer Leitung 1 in ein Rohr 2. Sie weist eine an einem Rohrende 3 des Rohres 2 einsetzbare Kappe 4 auf, die an der Innenwand des Rohres 2 dichtend anliegt. Die Kappe 4 ist nach Art eines Segels auf der dem Rohrende 3 zugewandten Seite konkav geformt, wodurch nur der äußere Rand der Kappe 4 mit der Innenwand des Rohres 2 in Verbindung steht, so daß insgesamt nur wenig Reibung zwischen der Kappe 4 und dem Rohr 2 herrscht. Ebenfalls auf der dem Rohrende 3 zugewandten Seite der Kappe 4 ist nach einer ersten Ausführungsform ein Anschlußteil 5 angeordnet, das als Metallstift ausgebildet ist und einen Hakenverschluß 6 aufweist, in den das Ende der Leitung 1 eingehängt wird, daß dazu eine Schleife aufweist. Die Vorrichtung umfaßt weiterhin eine Dichtung 8, die zum Verschließen des Rohrendes 3 dient. Die Dichtung 8 ist als Kegel ausgebildet, damit diese bei unterschiedlichen Rohrdurchmessern eingesetzt werden kann. Die Leitung 1 selber wird bei der in den Fig. 1 und 2 dargestellten Ausführungsform durch einen Führungskanal 9 durch die Dichtung 8 geführt, wobei der Führungskanal 9 durch eine Bohrung in der Dichtung 8 gebildet ist und als Auskleidung eine nicht dargestellte Metallhülse aufweist. Neben dem Führungskanal 9 weist die Dichtung 8 gleichfalls einen Gaskanal 10 auf, an dem in dem in der Fig. 3 dargestellten Ausführungsbeispiel eine Druckluftpistole 11 integral angeschlossen ist, die über einen Anschluß 12 mit einem Druckluftsystem in Verbindung steht. Bei diesem Ausführungsbeispiel sind der Führungskanal 9 und der Gaskanal 10 durch eine gemeinsame Bohrung 18 in der Dichtung 8 gebildet, wobei die Leitung 1 durch eine Öffnung 20 in der Gasleitung 15 vor deren Verbindung mit der Dichtung 8 geführt ist. Die Öffnung 19 ist zweifach vorgesehen und dient der Ansaugung von Luft, um die Reichweite zu vergrößern. In der Zeichnung ist die untere Öffnung 19 durch einen Versteifungssteg 20 überbrückt.

An der Druckluftpistole 11 ist eine Vorratsrolle 14 für die Leitung 1 vorgesehen, die durch eine Öse 17 geführt wird.

Die Eintrittsmündung und die Austrittsmündung der Bohrung des Führungskanals 9 für die Leitung 1 ist jeweils konisch ausgebildet, um nur kleine Knickwinkel der Leitung zu erreichen.

Im folgenden soll der Einsatz der erfindungsgemäßen Vorrichtung geschildert werden. Die als Kegel ausgebildete Dichtung 8 wird mit dem Gaskanal 10 an der Druckluftpistole 11 befestigt bzw ist einstückig mit dieser ausgebildet. An der Druckluftpistole 11 ist die Vorratsrolle 14 mit der Leitung 1 befestigt, wobei auf der Vorratsrolle 14 gleichfalls eine Schnur oder ein Draht aufgewickelt sein kann, wenn es sich als notwendig erweisen sollte, diese als Zugmittel für eine sehr dicke oder schwere Leitung durch das Rohr durchzuziehen. Die Leitung 1 wird dann durch die Öse und den Führungskanal 9 der Dichtung 8 hindurchgeführt. An dem Ende der Leitung 1 wird eine Schleife 7 ausgebildet, die in den Hakenverschluß 6 der Kappe 4 eingehängt wird bzw deren Knoten das Loch in dem Segel abdichtet. Die Kappe 4 wird in das Rohrende 3 eingesetzt, woraufhin die Dichtung 8 zur Anlage an das Rohrende 3 gebracht wird und durch den Gaskanal 10 der Dichtung 8 von der Druckluftpistole 11 Druckluft in das Rohr 2 eingeblasen wird. Die Kappe 4 wird bis zu Entfernungen von deutlich mehr als 50 m durch das Rohr 2 geblasen, wobei das Rohr bis zu 180° gekrümmt sein kann. Die Kappe 4 zieht die Leitung 1 hinter sich her, bis sie auf der anderen Seite des Rohres 2 austritt und die Druckluft an der Kappe 4 vorbeisströmen kann. Die Kappe 4 wird dann von der Leitung 1 entfernt und steht für einen erneuten Einsatz zur Verfügung.

## Patentansprüche

1. Vorrichtung zum Einziehen von einer Leitung (1) in ein Rohr (2), dadurch gekennzeichnet, daß eine an einem Rohrende (3) des Rohres (2) einsetzbare, mit der Leitung (1) koppelbare Kappe (4) vorgesehen ist, daß die Leitung (1) durch einen Führungskanal (10) einer das Rohrende (3) verschließenden Dichtung (8) geführt ist, und daß an einem Gaskanal (10) in der Dichtung (8) eine mit Druck beaufschlagbare Gasleitung (15) angesetzt ist.

2. Vorrichtung nach Anspruch 1, dadurch gekennzeichnet, daß als Gas Druckluft vorgesehen und an der Gasleitung (15) eine Druckluftpistole (11) angeschlossen ist, die an dem Gaskanal (10) der Dichtung (8) angesetzt ist.

3. Vorrichtung nach Anspruch 1 oder 2, dadurch gekennzeichnet, daß der Führungskanal (9) durch eine Bohrung in der Dichtung (8) gebildet ist.

4. Vorrichtung nach einem der Ansprüche 1 bis 3, dadurch gekennzeichnet, daß im Führungskanal (9) eine Metallhülse angeordnet ist.

5. Vorrichtung nach einem der Ansprüche 1 bis 4, dadurch gekennzeichnet, daß der Führungskanal (9) und der Gaskanal (10) durch eine gemeinsame Bohrung (18) in der Dichtung (8) gebildet sind.

6. Vorrichtung nach einem der Ansprüche 1 bis 5, dadurch gekennzeichnet, daß in der Gasleitung(15) vor deren Verbindung mit der Dichtung (8) eine Öffnung (19) zum Ansaugen von Luft vorgesehen ist.

7. Vorrichtung nach Anspruch 6, dadurch gekennzeichnet, daß zwei der Öffnungen (19) vorgesehen sind, die sich gegenüberliegend angeordnet sind, und daß ein Versteifungssteg (20) eine der Öffnungen (19) überbrückt.

8. Vorrichtung nach einem der Ansprüche 1 bis 7, dadurch gekennzeichnet, daß die Dichtung (8) als Kegel ausgebildet ist.

9. Vorrichtung nach einem der Ansprüche 1 bis 8, dadurch gekennzeichnet, daß im Gaskanal (10) eine Metallhülse (13) angeordnet ist.

10. Vorrichtung nach einem der Ansprüche 1 bis 9, dadurch gekennzeichnet, daß die Kappe (4) als Segel ausgebildet ist, das derartig in das Rohrende (3) einsetzbar ist, daß es an der Innenwand des Rohres (2) dichtend anliegt.

11. Vorrichtung nach Anspruch 10, dadurch gekennzeichnet, daß im Segel ein Loch vorgesehen ist, das durch die durchgeführte Leitung (1) abgedichtet ist.

12. Vorrichtung nach einem der Ansprüche 1 bis 11, dadurch gekennzeichnet, daß die Dichtung (8) an dem dem Rohr (2) zugewandten Ende einen zylinderförmigen Bund (16) aufweist.

13. Vorrichtung nach einem der Ansprüche 1 bis 9, dadurch gekennzeichnet, daß auf der dem Rohrende (3) zugewandten Seite der Kappe (4) ein Anschlußteil (5) für die Befestigung der Leitung (1) angeordnet ist.

14. Vorrichtung nach einem der Anspruch 13, dadurch gekennzeichnet, daß das Anschlußteil (5) als Metallstift mit einem Hakenverschluß (6) ausgebildet ist.

15. Vorrichtung nach einem der Ansprüche 2 bis 14, dadurch gekennzeichnet, daß an der Druckluftpistole (11) eine Vorratsrolle (14) für die Leitung (1) angeordnet ist.

16. Vorrichtung nach einem der Ansprüche 2 bis 15, dadurch gekennzeichnet, daß an der Druckluftpistole (11) eine Öse (17) zur Führung der Leitung (1) angeordnet ist.
